# EUROPEAN PATENT APPLICATION

(11) **EP 4 538 246 A1**
(43) Date of publication of application: **16.04.2025**
(21) Application number: 23306738.8
(22) Date of filing: 09.10.2023
(51) Int. Cl.: C04B 28/18, C04B 111/28

(54) **INSULATION MATERIAL**

(71) Applicant: Calderys France, 92130 Issy-les-Moulineaux (FR)
(72) Inventor: Pandey, Vinod, Rajasthan 301019 (IN); Sinha, Saumen, Nagpur 400015 Maharashtra (IN); Basak, Santanu, Nagpur 440022 Maharashtra (IN)
(74) Representative: Haseltine Lake Kempner LLP

(57) **Abstract**

The invention provides a composition and method for making calcium silicate insulation products, the products having high hydrophobicity and low leaching of chloride.

## Description

### FIELD OF INVENTION

The invention relates to calcium silicate insulation material and its method of manufacture. In particular, calcium silicate insulation with low chloride leaching and with high hydrophobicity is described. This insulation type is especially suitable for steel pipes.

### BACKGROUND OF THE INVENTION

Insulation for steel components such as pipes is required in various industries. In some technical areas, such as petrochemicals, the conditions are harsh and can include periodic or continuous submersion in water. Water ingress through the insulation material and to the underlying pipe is undesirable, because it vastly reduces the thermal insulation capability of the insulation materials. This reduced insulation capability is due to water drawing heat away from the pipe to the outside through the insulation into which the water has permeated. When the pipe is carrying steam, additional energy input is required to make up for the thermal loss caused by the wet pipe insulation.

An additional problem experienced with some insulation materials is the leaching of chloride over time from the insulation material. Steel is susceptible to corrosion by this leached chloride, sometimes referred to as "corrosion under insulation" (CUI). CUI is highly undesirable, because it is unseen from the outside and can have a deleterious effect in terms of pipe failure and leakage of the material being transported in the pipe.

The petrochemical industry places further requirements on pipe insulation material. For example, the thermal insulation capability as well as the mechanical and chemical performance of the insulation material must be retained at elevated temperatures.

Calcium silicate is a known thermal insulator. However, existing calcium silicate insulating materials absorb water, thereby suffering from the loss of thermal insulation capability described above. Furthermore, regular variants of calcium silicate materials include chloride radicals, which are leached by absorbed water and hence corrode an underlying metal component, such as a steel pipe.

Standard pipe insulation materials include aerogel, perlite and mineral wool. These materials are used for their low thermal conductivity and low chloride leaching properties. However, it would be beneficial to find an alternative to the existing products, with improved mechanical properties.

Overall, it is desirable to develop an insulation material that has a better service life and better thermo-mechanical performance than the standard pipe insulating materials, whilst still limiting water absorption and chloride leaching.

### SUMMARY OF THE INVENTION

The invention provides an insulation material formable from the combination of calcium silicate and an additive, wherein the additive comprises one or both of a siloxane and a thiosulphate.

The invention also provides a composition for preparing an insulation material, comprising
a) either
   i) calcium silicate; or
   ii) calcium silicate precursors comprising silica, lime, and water;
   and
b) an additive, wherein the additive comprises one or both of a siloxane and a thiosulphate.

The invention also provides use of the inventive calcium silicate insulation material for insulating pipes, which may comprise steel, i.e. steel pipes.

The invention also provides a pipe, which may be a steel pipe, having thereon a layer of an insulation material of the invention.

The invention also provides a method of preparing an insulation material, comprising the steps, in order: (a) providing components, wherein the components comprise (i) either calcium silicate, or calcium silicate precursors comprising silica and lime; (ii) an additive, wherein the additive comprises one or both of a siloxane and a thiosulphate; (iii) water; (iv) optional fibrous material; and (v) optional flocculent; (b) mixing the components to form a mixture; (c) pressing the mixture; (d) drying the mixture.

Alternative insulating materials exist on the market and exhibit water repellency and/or low chloride leaching, but suffer drawbacks compared to calcium silicate insulating materials. For example, aerogel is expensive and some manufacturing methods utilize chemicals that are environmentally unacceptable. Perlite and fibrous insulation have poorer flexural and compressive strength compared to calcium silicate insulation. At higher temperatures, the insulation characteristics of calcium silicate are better than those of fibrous insulation. The inventors surprisingly found that, whereas conventional calcium silicate insulation products typically exhibit unacceptable levels of chloride leaching and are hydrophilic, the products of the invention have reduced chloride leaching whilst maintaining their excellent mechanical properties that are not attained by all of the existing materials. The products of the invention may also exhibit increased hydrophobicity compared to conventional, unmodified calcium silicate insulation.

### BRIEF DESCRIPTION OF DRAWINGS

Figure 1 is a flow chart of an exemplary method according to the invention.
Figure 2 is a photograph showing water absorption of (A) calcium silicate insulation without additive and (B) calcium silicate insulation with additive according to the invention.

### DETAILED DESCRIPTION OF THE INVENTION

### Definitions

"Calcium silicate" as used herein refers to any mixture of compounds formed from the reaction of silica and lime with water. The variety of compounds that result from this reaction are well-known in the art and can include, for example, Afwillite, Gyrolite, Jennite, Thaumasite, Tobermorite, Xonotlite, Hydrogarnet, Hydrotalcite and Tacharanite.

### Method

The method of the invention is preferably a sol-gel process. In this process, lime (CaO and/or Ca(OH)₂) and silica precursor materials, for example hydrated lime and quartz, are combined with water to form a slurry and then the slurry is heated, optionally under pressure. The resulting gel-like product comprises calcium silicate. The calcium silicate is then mixed with the additive and any additional components. The resulting mixture is shaped and then heated, optionally under pressure, to form the final calcium silicate insulation product.

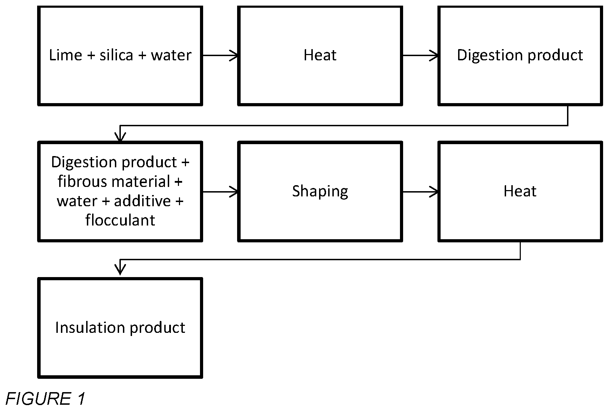

Figure 1 shows a flow chart of an exemplary method of manufacture according to the invention, including the preliminary step of preparing the calcium silicate.

In the preliminary step of preparing the calcium silicate, the lime and silica may be presented in stoichiometric amounts, or there may be an excess of either component. Preferably the amount of silica is from 1 to 7 parts by weight, such as from 2.5 to 5 parts by weight, and the amount of lime is from 3 to 11 parts by weight, such as from 4.7 to 9.4 parts by weight. The silica and lime may be combined with from 80 to 96 parts by weight of water, such as from 85 to 92 parts by weight of water. An exemplary composition for the preliminary step is given in Table 1 in the examples.

Any suitable source or form of silica may be used, for example one or more of quartz, sand, and diatomaceous earth. Any suitable source or form of lime may be used, for example the source may be chalk.

The silica and lime slurry may be heated for up to about 10 hours, such as from about 1 hour to about 8 hours, such as from about 2 hours to about 6 hours, such as from about 3 hours to about 5 hours. The heating time may be approximately 4 hours.

The silica and lime slurry may be heated to a temperature of from about 100 to 200 °C, such as from about 100 to 150 °C, such as from about 120 to 130 °C.

The silica and lime slurry may be heated at a pressure of up to about 20 kg/cm², such as from about 10 to about 20 kg/cm², such as from about 12 to about 17 kg/cm². The silica and lime slurry may be heated at a pressure of approximately 14.5 to 15.5 kg/cm².

The gel-like product that is obtained after heating the slurry of lime, silica and water is referred to herein as the "digestion yield" or "digestion product".

The digestion product may comprise from about 5 to about 40 wt. % calcium silicate, such as from about 5 to about 30 wt. % calcium silicate, such as from about 7 to about 20 wt. % calcium silicate, such as from about 7 to about 15 wt. % calcium silicate. The balance may be all or substantially all water. For example, the digestion product may comprise approximately 10 wt. % calcium silicate and approximately 90 wt. % water. Other ratios of calcium silicate to water are possible, depending on the conditions of reaction, such as time and temperature. A different concentration of calcium silicate at this stage will affect the viscosity of the gel-like digestion product, but is not important for achieving the technical effect.

The calcium silicate may include unwanted phases (referred to as "impurities" here) in amounts of up to 25 wt. %. For example, vaterite, calcite and quartz may be present in the calcium silicate. Preferably the amount of impurities is no greater than 25 wt.% of the calcium silicate, such as less than 20 wt. % of the calcium silicate, such as less than 15 wt. % of the calcium silicate, such as less than 10 wt. % of the calcium silicate. The amount of impurities may be from 0 to 20 wt. % of the calcium silicate, for example from 5 to 15 wt. % of the calcium silicate.

The time, temperature and pressure at which lime, silica and water are reacted will affect the composition of the resulting calcium silicate. For example, the ratios of xonotlite to tobermorite and other forms of calcium silicate are known to be controlled by the reaction conditions. As used herein, "calcium silicate" refers to any reaction product of lime and silica. The exact composition of the calcium silicate is not important for achieving the benefits of the invention.

In the next stage of the method, the digestion product is combined with the additive and, optionally, further water. Any optional components for the final insulation product may be added at this stage, too.

In the mixture of the digestion product and the additive, the components may be combined in the following amounts (excluding water):
calcium silicate - 30-95 wt. %, such as 35-95 wt. %; such as 35-90 wt. %, such as 40-85 wt. %;
additive - 1-45 wt. %, such as 2-45 wt. %, such as 5-45 wt. %, such as 10-45 wt. %, such as 20-40 wt. %, such as 25-30 wt.%;
fibrous material - 0-60 wt.%, such as 0-40 wt.%, such as 5-20 wt. %.

In some embodiments, there are no further components and the balance is water. In other embodiments up to 10 wt. % of other components ("fillers") in total may be provided.

In some embodiments, the composition for shaping and heating to make the final product consists of calcium silicate, fibrous material, additive, flocculent, and water.

In some embodiments, the composition for shaping and heating to make the final product consists of calcium silicate, additive, flocculent, and water.

In some embodiments, the composition for shaping and heating to make the final product consists of calcium silicate, fibrous material, additive, and water.

In some embodiments, the composition for shaping and heating to make the final product consists of calcium silicate, additive, and water.

Preferably a flocculent is used in the method of the invention, to aid in removing water from the mixture prior to and/or during shaping.

Shaping the mixture may involve casting the mixture into a mould, spreading the mixture onto a surface, pressing the mixture, or any other suitable method of shaping.

### Additive

The additive used in the invention is one or both of a siloxane and a thiosulphate.

The additive may be provided in the form of an aqueous dispersion, especially when the additive is or comprises a siloxane.

The weight ratio of calcium silicate to additive in the insulation product may be from about 1:1 to about 10:0.2, such as from about 1:1 to about 10:0.4, such as from about 7:5 to about 8:0.45, such as from about 7:5 to about 8:1.75.

### Siloxane

The siloxane additive is preferably a polymeric siloxane comprising organic radicals. The siloxane additive may be, for example, a polyalkoxy silane, a polyamino siloxane, or a poly alkoxy amino silane. Suitable compounds may include polysiloxanes comprising both alkyl and amino functionalization. Suitable siloxanes include C₁₋₁₀ alkoxy-functionalized poly silanes, such as methoxy-, ethoxy-, propoxy- and butoxy-functionalized poly silanes. Further suitable examples include C₁₋₁₀ amino-functionalized polysiloxanes and C₁₋₁₀ amino-functionalized polysilanes. Preferred siloxanes include C₁₋₁₀ alkoxy-terminated polyaminoalkylsiloxanes and C₁₋₁₀ alkoxy-terminated polyaminoalkoxysilanes.

The polysiloxane additive is or comprises an amino-functional silane of the formula (I) or a polymer thereof:

(SiO_{4/2})ₐ(R¹SiO_{3/2})_{b}(R²SiO_{3/2})_{b'}(R²SiO_{2/2})_{c}(R¹R²SiO_{2/2})_{c'}(R²₂SiO_{2/2})_{c"}(R¹₃SiO_{1/2})_{d}(R¹₂R²SiO_{1 /2})_{d'}(R¹R²₂SiO_{1/2})_{d"}(R²₃SiO_{1/2})_{d‴} formula (I)

in which the indices a, b, c, c', c", d, d', d" and d‴ indicate the number of the respective siloxane unit in the compound and independently of one another are an integer in the range from 0 to 100,000, with the proviso that the sum of a, b, b', c, c', c", d, d', d", d‴ together adopts a value of at least 2, and at least one of the indices b', c', c", d', d" or d‴ is other than 0; and in which the radicals R¹ independently of one another are a C₂-C₁₈ hydrocarbon radical which is unsubstituted or substituted by at least one fluorine, chlorine or bromine atom or by a C₁-C₁₈ alkoxy group; preferably the radicals R¹ independently of one another are a C₁-C₆ alkyl radical, more particularly a methyl radical and in which the radicals R² are a group of the general formula

-R-[NR'(CH₂)ₙ]_{a'}N(R')₂ formula (II)

in which the index n adopts the values 2, 3, 4, 5 or 6, the index a' adopts the values 0, 1, 2, 3 or 4, the radical R is a divalent, linear, unbranched or branched C₁-C₁₈-hydrocarbon radical, the radicals R' independently of one another are selected from the group consisting of (i) hydrogen, (ii) C₁-C₁₈ hydrocarbon radical which is unsubstituted or substituted by at least one fluorine, chlorine or bromine atom or by a hydroxyl group or by a C₁-C₅ alkoxy group, or (iii) acyl radical which is unsubstituted or substituted by at least one fluorine, chlorine or bromine atom or by a hydroxyl group or by a C₁-C₅ alkoxy group; preferably the index a' adopts a value of 1, the index n adopts a value of 2, the radicals R' are hydrogen, and the radical R is a divalent C₁-C₆ hydrocarbon radical, more particularly a propylene radical.

The polysiloxane may be a polymer comprising units of the formula (III):

Rₐ(R¹O)_{b}SiO_{(4-a-b)/2} formula (III)

in which R may be the same or different and is a hydrogen atom or a monovalent, SiC-bonded, optionally substituted hydrocarbyl radical, R may be the same or different and is a hydrogen atom or a monovalent, optionally substituted hydrocarbyl radical, a is 0, 1, 2 or 3, preferably 1, 2 or 3, and b is 0, 1, 2 or 3, preferably 0 or 1, with the proviso that the sum of a and b is less than or equal to 3.

The polysiloxane may be a polymer comprising units of the formula (IV):

R³_{c}R²_{d}Si(OR⁴)_{4-c-d} formula (IV)

in which R² may be the same or different and denotes monovalent, SiC-bonded, optionally substituted hydrocarbyl radicals having 1 to 3 carbon atoms, R³ may be the same or different and denotes monovalent, SiC-bonded, optionally substituted hydrocarbyl radicals having at least 4 carbon atoms, which may be interrupted by heteroatoms and/or carbonyl groups, R⁴ may be the same or different and denotes monovalent, optionally substituted hydrocarbyl radicals or hydrogen, c is 1, 2 or 3, preferably 1, and d is 0, 1 or 2, preferably 0 or 1, with the proviso that the sum of c and d is 1, 2 or 3, and/or partial hydrolyzates thereof.

Suitable polysiloxane emulsions for use in the method of the invention are commercially available as SILRES ^{®} products from WACKER Chemie AG, for example SILRES ^{®} BS 1042, an OH-terminated, reactive polydimethylsiloxane; SILRES ^{®} BS 1052, a trimethylsilyl-terminated, nonreactive polydimethylsiloxane; SILRES ^{®} BS 1340, an amino-functional polydimethylsiloxane; and SILRES ^{®} BS 1805, methoxy-terminated, poly[3-((2-aminoethyl)amino) propyl]methyl(dimethyl) siloxane.

An amino-functional organo-siloxane may have an amino number in the range of 0.05 to 0.40, wherein the amine number is measured and defined as in DIN 53176.

Particularly preferred examples of siloxanes for the additive in the invention are poly [3-((2-aminoethyl)amino) propyl] methyl(dimethyl) siloxane, methoxy-terminated; and polydimethylsiloxane (PDMS).

The siloxanes used in the invention may be used in dimeric, oligomeric or polymeric form, preferably polymeric form. The organic radicals of the siloxanes may be linear or branched. Polymeric siloxanes may be homopolymers or copolymers. A mixture of polymeric siloxanes may be used. Preferred polysiloxanes are organopolysiloxanes, including polyalkoxysilanes and poly amino siloxanes and poly amino alkoxy silanes.

It is believed that introducing the siloxane additive during the sol-gel process enables a more reliable performance of the calcium silicate insulation product in terms of prevention of chloride leaching. This order of method steps is also believed to increase the hydrophobicity of the insulation material, compared to providing a coating on the exterior of a finished calcium silicate insulation component. The siloxane is believed to prevent water ingress into and through the calcium silicate insulation material, thereby preventing an underlying component such as a steel pipe from becoming wet and losing heat. In keeping the insulation dry, any residual chloride radicals in the insulation material are prevented from becoming aqueous chloride ions, which are known to attack steel and to cause corrosion under insulation (CUI).

In a preferred embodiment, the additive is a siloxane such as poly [3-((2-aminoethyl)amino) propyl] methyl(dimethyl) siloxane, methoxy-terminated and is present in an amount of from about 0.23 to about 5 wt. % of the insulation product, from about 0.45 to about 5 wt. % of the insulation product, such as from about 1 wt. % to about 5 wt. % of the insulation product, such as from about 1 wt. % to about 4 wt. % of the insulation product.

In the process of the invention, the siloxane may be provided in a liquid format such as an emulsion. An emulsion of polysiloxane in water may comprise about 25 wt. % to about 50 wt. % of polysiloxane, for example. The relative amounts of the polysiloxane in the insulation product are quoted without the water of emulsion.

Other formulations of siloxanes may be used. Commercial formulations of siloxanes are available inter alia as emulsions in water. Siloxanes may be provided as solutions in water or other solvents, as emulsions in water or other solvents, as dispersions in water or other solvents, as pure or diluted liquids, or in any other suitable physical format.

A suitable formulation of PDMS is a mixture of stearic acid (powder), isopropyl alcohol (liquid) and PDMS (liquid), i.e. a dilution of PDMS in isopropyl stearate. For example, a dilution of about 12 wt.% PDMS in isopropyl stearate may be used.

### Thiosulphate

The thiosulphate additive may be a metal thiosulphate, such as an alkali thiosulphate, for example sodium or potassium thiosulphate. Alkali thiosulphates are typically provided in crystalline powder form, but may be dissolved in water before use in the method of the invention. For example, sodium thiosulphate in powder form having a purity of about 99% may be used.

In a preferred embodiment, the additive is sodium thiosulphate and is present in an amount of from about 1.75 to about 5 wt. % of the insulation product.

### Other components

Further to the calcium silicate and the additive, the composition used in the method of the invention may comprise other components. Other components are preferably included at the same mixing stage as the additive, but may be introduced into the method at any suitable point.

### Flocculent

The composition preferably comprises a flocculent. The function of the flocculent is to aid in removing residual water in the final stage of the method. Any suitable flocculent may be used, for example polymeric, metal oxide, metallic, natural-derived such as lignin-based, and sulfide-based, preferably sulfide-based. A preferred type of flocculent is an anionic polyacrylamide, such as (CH₂CHCONH₂)ₙ(CH₂CHCOONa)ₘ (acrylamide sodium acrylate copolymer) .

### Fibrous material

Various types of fibrous material may be included in the composition. The function of the fibrous material is to increase flexural strength and tensile strength of the calcium silicate insulation. A single type of fibrous material may be included, or a mixture of different fibre types may be included. The fibrous material may be natural or synthetic. The fibrous material may be organic or inorganic.

As used herein, "fibrous material" includes materials that may be acicular and brittle, such as wollastonite.

Suitable types of fibrous material include mineral wool, chopped glass fibre, jeans pulp and wollastonite. Other types of fibre may be included in the composition according to the needs of the end user, for example for IR opacity, density, eco-credentials, etc., for example carbon fibres, aramid fibres, cellulose fibres, and others, may be used.

Preferably the total amount of fibre in the insulation product does not exceed 60 wt. %. Individual fibre types may be present in an amount of up to 30 wt. % of the insulation product, such as up to 15 wt. % of the insulation product. Suitable relative amounts of fibrous material for use in the method of the invention are given in Table 2 in the examples, the weight percentages quoted there accounting for water in the composition for shaping.

### Fillers

Other types of fillers may optionally be included in the composition used in the method of the invention. Fillers may be in any suitable form, such as particulate or granular form. For example, unreacted silica may be included for mechanical properties; biocides may be included for reducing biofilm formation. Opacifiers, pigments, and other types of filler may optionally be used. The relative amount of any optional filler used in the composition must be selected so as not to deteriorate the mechanical properties of the calcium silicate insulation. In the final product, the amount of fillers may be present in an amount of up to about 10 wt. %, preferably in an amount of no greater than 5 wt. %.

### Insulation product

The insulation product of the invention is a calcium silicate insulation product. It is preferably shaped into a desired end product, such as a pipe insulation section, a board, or other shape. A pipe insulation section may be, for example, a partially-annular section (i.e. having a length and a cross-section, wherein the cross-section has an inner surface that forms part of a circumference of a pipe), which may be joined with one or more other partially-annular sections around a pipe to form a fully-annular insulation, i.e. around the whole circumference of the pipe to be insulated, or smaller curved segments. A pipe insulation section may be, for example, a half-annular section, which may be joined with another half-annular section around a pipe to be insulated, or smaller curved segments.

In the form of pipe insulation, the insulation product may have a thickness of from about 25 to about 100 mm and an internal diameter of from about 20 to about 400 mm. Each pipe section may have a length of from about 300 to about 700 mm. Other dimensions are envisaged depending on the end use intended for the insulation product.

In the form of a thermal insulation board, such as may typically be used for construction of buildings, the insulation product may have a thickness of about 20 to 120 mm, such as 50 to 100 mm; a length of about 700 to about 1100 mm and a width of about 400 to about 800 mm. Other dimensions are envisaged depending on the end use intended for the insulation product.

The insulation product may have a density of from about 100 to about 400 kg/m³, such as from about 200 to about 300 kg/m³. The insulation product may have a flexural strength of from about 200 to about 1000 kN/m² (min), such as from about 400 to about 800 kN/m² (min). Before installation, the insulation product may have a moisture content of no greater than about 10 wt. %, preferably no greater than about 7.5 wt. %. The insulation product may have a dry compressibility of no greater than about 7 % (reduction in thickness), such as no greater than about 5 %, under a load of 415 kN/m². The insulation product may have a wet compressibility, after 18 hours immersion in water, under a load of 170 kN/m², of no greater than about 7 %, such as no greater than about 5 %.

After heating at 1050 °C for 12 hours, the insulation product may exhibit a linear shrinkage (length) of no greater than about 5 %, such as no greater than about 2 %, preferably no greater than about 1.5 %. Following the same treatment, the insulation product may exhibit a % mass loss of no greater than about 15, such as no greater than about 12, preferably no greater than about 10.

The insulation product may have a thermal conductivity of no greater than about 0.100 W/mK at 300 °C, such as no greater than about 0.080 W/mK at 300 °C. The insulation product may have a thermal conductivity of no greater than 0.110 W/mK at 400 °C, such as no greater than about 0.100 W/mK at 400 °C. The insulation product may have a thermal conductivity of no greater than about 0.130 W/mK at 500 °C, such as no greater than about 0.120 W/mK at 500 °C.

The insulation product may exhibit a water absorption of no greater than about 50 %, such as no greater than about 40 %, preferably no greater than about 20 %. The lower the water absorption, the lower the loss in thermal insulation capability of the insulation product in real-life conditions.

The insulation product preferably exhibits a leachable chloride content of no greater than 50 ppm, measured according to ASTM C871-11.

The insulation product may be used to insulate any suitable object or construction. In a preferred example, the insulation product is used to insulate pipes, for example steel pipes. In the petrochemical industry, steel pipes are typically used to transport steam. The insulation product of the invention when used in this scenario may minimize heat loss due to its hydrophobicity and minimize corrosion under insulation due to its low level of chloride leaching. This means that calcium silicate insulation may be used in this context where previously it was considered to be unsuitable, thereby bringing the other benefits of calcium silicate insulation to this industry, such as its excellent mechanical performance at both ambient and high temperatures.

As such, the invention provides for a steel component, such as a steel pipe, having thereon a layer of the insulation material of the invention.

### Test methods

- ASTM C795-08(2018) - Standard Specification for Thermal Insulation for Use in Contact with Austenitic Stainless Steel - for measurement of corrosion inhibition of insulation material
- ASTM C871-11^{ε1} - Standard Test Methods For chemical Analysis of Thermal Insulation Materials for Leachable Chloride, Fluoride, Silicate and Sodium Ions - for measurement of leachable chloride from the insulation material
- ASTM C610-07 - Standard Specification for Molded Expanded Perlite Block and Pipe Thermal Insulation - for measurement of hydrophobicity of insulation material at room temperature
- IS 5688 : 1982 - Methods of Test for Preformed Block-Type and Pip-Covering Type Thermal Insulation
- IS 9428 : 1993 - Preformed Calcium Silicate Insulation (for temperature up to 950 °C)
- IS 5724 : 2018 - Thermal Insulating Cements - Methods of Test
- IS 9490 : 2018 - Method for Determination of Thermal Conductivity of Thermal Insulation Materials (Water Calorimeter Method)

### EXAMPLES

### Preparation of calcium silicate

Silica and hydrated lime powder were mixed in the quantities shown in Table 1:

**Table 1**

| **Constituents** | **Weight %** |
|---|---|
| Silica flour (Blain's 10000, Test method - ISO 4031 - Part 2-1999) | 2.5 - 5% |
| Hydrated Lime (85% purity) | 4-8% |
| Water addition (%) | 85-92% |

The resulting slurry was cooked in a digester to form a digestion product. The process conditions are 14.5 to 15.5 kg/cm² pressure, 4 hours. The digestion product was gelatinous and is predicted to include one or more of Afwillite, Gyrolite, Jennite, Thaumasite, Tobermorite, Xonotlite, Hydrogarnet, Hydrotalcite and Tacharanite.

### Preparation of insulation product

The digestion product as prepared above was mixed with water and other ingredients in the quantities shown in the table below:

**Table 2**

| **Constituents** | **Weight %** |
|---|---|
| Digestion yield (Table 1) | 70-80 |
| Additional water(%) | 18-26 |
| Mineral wool (Loose bulk density 165 g/lt) | 0 - 1 |
| Chopped Glass (<12 mm - 40% min) | 0 - 1 |
| Jeans pulp (<200 mesh - 32 max) | 0 - 1 |
| Wollastonite (Calcium meta silicate CaSiO₃>94%) | 0 - 3 |
| Flocculent (sulfide based) | 0.0005 - 0.0008 |

The resulting mixture was wet pressed at a pressure of 80 kg/cm² in the shape of boards, air dried and then oven dried. The oven drying was at a temperature of 185 °C for 74 hours. The insulation product was obtained after the oven drying step.

### Investigation of hydrophobicity

The example method above was used to prepare insulation boards, with the modification that an amount of Additive A (polydimethyl siloxane) or of Additive B (silicone resin, SILRES BS 1805 IN, emulsion in water of Poly[3-((2-aminoethyl)amino) propyl]methyl(dimethyl) siloxane, methoxy-terminated, 25 to 50 % of the polysiloxane in the emulsion) was added to each test composition in the amounts shown in Table 3.

Following the process of shaping and drying described above, the dried blocks were tested for hydrophobicity at room temperature, as per ASTM C 610, after conditioning the specimens at 110 °C for 16 hours and subsequently heat treating the specimens at different temperatures. The heat treatments are shown in Table 3.

As per ASTM C 610, the water impregnation by 371 °C heat treated specimens should be < 50%. Although the ASTM C 610-07 requires test conditions of (1) control, (2) 300°F (149°C)/24 hours, (3) 500°F (260°C)/24 hours, and (4) 700°F (371°C)/24 hours, some samples here were also tested at 400°C to investigate water repellency performance at higher temperatures. The "Sample heat treating conditions" reported in Table 3 and as specified in section 11.1.8 of ASTM C 610-07 are intended to replicate heating conditions that may be experienced by an insulation product in real life and are not an essential part of the manufacturing process. Although ASTM C 610-07 is intended for molded expanded perlite block and pipe thermal insulation, it has been adapted to test the calcium silicate insulation products described in these examples.

The hydrophobicity results of Additive A and B incorporated specimens are reported in Table 3.

**Table 3**

| **Trial No** | **Additive A, %** | **Additive B, %** | **Sample Heat Treating Conditions** | **Water absorption, %** |
|---|---|---|---|---|
| 1 | 2.5 | - | without heat treatment | 11.885 |
| 2 | 2.5 | - | 350 ⁰C @ 2 hrs | 14.22 |
| 3 | 2.5 | - | 400 ⁰C @ 2 hrs | 72 |
| 4 | 2.5 | - | 400 ⁰C @ 5hrs | 74 |
| 5 | 3.0 | - | 400 ⁰C @ 5hrs | 42.6 |
| 6 | 3.0 | - | 400 ^{°}C @ 9hrs | 60.62 |
| 7 | 3.0 | - | 400 ^{°}C @ 16hrs | 79.1 |
| 8 | 3.0 | - | 371 °C @ 24hrs | 86.1 |
| 9 | - | 2.5 | without heat treatment | 5.845 |
| 10 | - | 2.5 | 350 C @ 2 hrs | 7.54 |
| 11 | - | 2.5 | 400 C @ 2 hrs | 10.84 |
| 12 | - | 2.5 | 400 C @ 5hrs | 52 |
| 13 | - | 3.0 | 400 C @ 5hrs | 8.84 |
| 14 | - | 3.0 | 400 C @ 9hrs | 14.42 |
| 15 | - | 3.0 | 400 C @ 16hrs | 18.51 |
| 16 | - | 2.5 | 371 C @ 24hrs | 24.32 |
| 17 | - | 2 | 371 C @ 24hrs | 28.47 |

Water absorption was decreased (i.e. improved) by changing the additive from PDMS to the silicone resin:
- comparison of trial numbers 1-4 (2.5% PDMS) with trial numbers 9-12 (2.5% of the silicone resin) demonstrate this effect over four different heat treatment conditions;
- comparison of trial numbers 5-7 (3% PDMS) with trial numbers 13-15 (3% of the silicone resin) demonstrate this effect at 400°C treatment temperature across three different treatment times.

Water absorption was decreased (i.e. improved) by increasing the amount of additive:
- comparison of trials 4 and 5 demonstrate this effect for 2.5% PDMS and for 3% PDMS, respectively, at 400°C, 5 hour heat treatment;
- comparison of trials 12 and 13 demonstrate this effect for 2.5% of the silicone resin and for 3% of the silicone resin, respectively at 400°C, 5 hour heat treatment.

Water absorption was decreased (i.e. improved) when the heat treatment time was decreased:
- comparison of trials 5, 6, and 7 demonstrates this effect for a treatment temperature of 400°C and 3% PDMS as additive;
- comparison of trials 3 and 4 demonstrates this effect for a heat treatment temperature of 400°C and 2.5% PDMS as additive;
- comparison of trials 13, 14 and 15 demonstrates this effect for a heat treatment temperature of 400°C and 3% of the silicone resin as additive;
- comparison of trials 11 and 12 demonstrates this effect for a heat treatment temperature of 400°C and 2.5% of the silicone resin as additive.

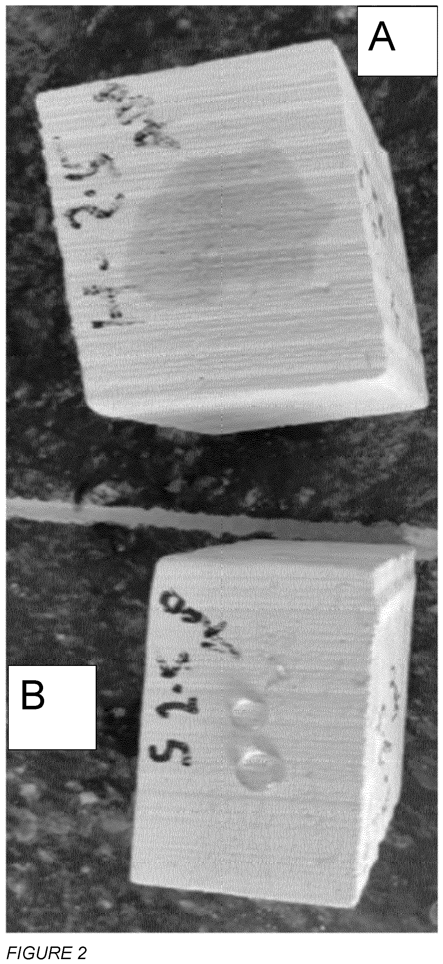

A visual demonstration of the water absorption benefit of the invention is shown in Figure 2. Two calcium silicate blocks were prepared that are identical in all respects except that block A has no additive and block B has 2.5 wt.% of Additive B silicone resin, i.e. the same amount and type of additive as used in Trial Nos. 9-12 and 16. Water was added to the surface of both blocks. Block A shows a patch where the water has soaked into the calcium silicate. Block B shows distinct droplets of water on the surface that have not soaked into the calcium silicate. In other words, block B, which is according to the invention, is much more resistant to water absorption than block A, which represents known calcium silicate blocks.

### Investigation of leachable chloride

Leachable chloride was tested as per ASTM 871-11. Target specification for leachable chloride is less than 50 ppm. The leachable chloride content of the current product, i.e. without any additive, is > 275 ppm. Additive B (silicone resin) based Formulations as well as Additive C (alkali thiosulphate) containing formulations were tested for leachable chloride contents. Additive C based test specimens were prepared as described above.

Table 4 reports the leachable chloride content, as per ASTM C 871 - 11, for Additive B and Additive C containing formulations, respectively. Formulation 17, based on Additive B, meets the requirements of ASTM 871-11. Formulation 17, thus, meets the requirements specified by ASTM standards for both Hydrophobicity as well as Leachable chloride. Incorporation of Additive B in Calcium Silicate insulation products would make it conform to ASTM C 610 and targeted leachable chloride content when tested as per ASTM C 871 - 11.

**Table 4**

| **Trial No.** | **Additive B, %** | **Additive C, %** | **Leachable chloride, ppm** |
|---|---|---|---|
| 17 | 2 | - | 36.97 |
| 18 | 1.5 | - | 90.54 |
| 19 | 2.5 | - | 5.239 |
| 20 | 0 | - | 275.39 |
| 21 | - | 2 | 37.65 |
| 22 | - | 1 | 125.24 |

Table 4 shows that the product containing 2% Additive C also meets the leachable chloride specification. It is prudent to mention that, unlike the Additive B containing formulation, Additive C based formulation does not meet the requirements for hydrophobicity.

An alternative additive, dimethyl sulfoxide (DMSO), was tested in an amount of 2 % (c.f. Trial No. 21 with 2 % of alkali thiosulphate). 200 ppm leachable chloride was found, compared to a maximum allowable amount of 50 ppm according to ASTM C 871 - 11. Although both DMSO and thiosulphate were effective in reducing leachable chloride content of the insulation product, thiosulphate surprisingly performed much better on this metric than DMSO.

The amount of leachable chloride decreased (improved) as the amount of additive was increased:
- comparison of trials 17 to 20 demonstrates this effect for the silicone resin additive;
- comparison of trials 21 and 22 demonstrates this effect for sodium thiosulphate additive.

### Investigation of the effect of Additives on mechanical properties of calcium silicate insulation material

Table 5 reports the properties of calcium silicate without any additive as well as with Additives B and C. It is evident that the results are comparable. It can be concluded that incorporation of the selected additives in calcium silicate insulation does not have any adverse impact on their physical as well as thermal properties. The physical as well as thermal properties of hydrophobic and low leachable chloride calcium silicates insulation products are the same as those for the existing products.

**Table 5**

| **Trial Number** | **Trial 20** | **Trial 17** | **Trial 21** | **TEST PROCEDURE** |
|---|---|---|---|---|
| Additive | None | B | C | |
| Dry Bulk Density, kg/m³ | 200-300 | 200-300 | 200-300 | IS : 5688 |
| Flexural strength, kN/m² (min) | 400-800 | 400-800 | 400-800 | IS : 5688 |
| As shipped Moisture Content, by weight %, (max) | 0-7.5 | 0-7.5 | 0-7.5 | IS : 9428 |
| Alkalinity, pH | 7-10 | 7-10 | 7-10 | IS : 9428 |

| Compressive Strength, reduction in thickness (%) not to exceed : | | | | |
|---|---|---|---|---|
| I) dry under a load of 415 kN/m² | 0-5 | 0-5 | 0-5 | IS : 5688 |
| II) wet (after 18 hrs immersion in water) under a load of 170 kN/m² | 0-5 | 0-5 | 0-5 | IS : 5688 |

| Heat Resistance | | | | |
|---|---|---|---|---|
| I) Linear Shrinkage(length) at 1050°C/12 Hrs., % (max) | 0-1.5 | 0-1.5 | 0-1.5 | IS : 5724 |
| II) Loss In Mass,% (max) | 0-10 | 0-10 | 0-10 | IS : 5724 |
| III) Compressive Strength, reduction in thickness(%) not to exceed under a load of 345 kN/m² | 0-5 | 0-5 | 0-5 | IS : 5688 |
| Thermal Conductivity at mean temperature, W/mK (max) | | | | |
| 300°C | 0.06- 0.076 | 0.06- 0.076 | 0.06- 0.076 | IS : 9490 |
| 400°C | 0.076- 0.090 | 0.076- 0.090 | 0.076- 0.090 | IS : 9490 |
| 500°C | 0.090- 0.110 | 0.090- 0.110 | 0.090- 0.110 | IS : 9490 |
| 550°C | 0.110-0.114 | 0.110-0.114 | 0.110-0.114 | IS : 9490 |

### INDUSTRIAL APPLICABILITY

In the field of pipe insulation, available products that meet the requirements of water repellency and low chloride leaching include perlite, fibrous insulation and aerogel. Calcium silicate has better compressive and flexural strength as compared to fibrous as well as perlite insulation. The insulation characteristics of calcium silicate are also better at higher temperatures than fibrous insulation. Hence the product of the invention is predicted to give a better service life and better thermo-mechanical performance compared to alternate materials.

## Claims

1. Method of preparing an insulation material, comprising the steps, in order:
a. providing components, wherein the components comprise
i. either calcium silicate, or calcium silicate precursors comprising silica and lime;
ii. an additive, wherein the additive comprises one or both of a siloxane and a thiosulphate;
iii. water;
iv. optional fibrous material; and
v. optional flocculent;
b. mixing the components to form a mixture;
c. shaping the mixture;
d. drying the mixture.

2. The method according to claim 1, comprising a preliminary step of forming the calcium silicate, the preliminary step comprising: providing lime, silica and water; mixing the lime, silica and water to form a slurry; heating the slurry under pressure to form a gelatinous digestion product comprising calcium silicate.

3. The method according to claim 1 or claim 2, wherein the components are provided in the following relative amounts, excluding water:
i. the calcium silicate 30-95 wt. %, such as 35-95 wt. %; such as 35-90 wt. %, such as 40-85 wt. %;
ii. the additive 1-45 wt. %, such as 2-45 wt. %, such as 5-45 wt.%, such as 10-45 wt. %, such as 20-40 wt. %, such as 25-30 wt. %;
iii. the fibrous material 60 wt.%, such as 0-40 wt.%, such as 5-20 wt. %;
iv. the flocculent 0 to 0.01 wt. %, such as 0.002 to 0.01 wt. %;

4. An insulation material formable from the combination of calcium silicate and an additive, wherein the additive comprises one or both of a siloxane and a thiosulphate, and wherein the additive is homogeneously distributed throughout the insulation material.

5. The insulation material of claim 4, wherein the siloxane is a polyalkoxy siloxane and/or a polyamino siloxane and/or a polyamino alkoxy siloxane.

6. The insulation material of claim 5, wherein the siloxane comprises C₁₋₁₀ radicals, wherein the C₁₋₁₀ radicals are selected from alkyl, amino and alkoxy radicals and combinations thereof.

7. The insulation material of claim 4, wherein the siloxane is a polymeric aminofunctional organosilicon compound having an amine number in the range of from 0.05 to 0.40.

8. The insulation material of claim 4, wherein the siloxane is polydimethylsiloxane.

9. The insulation material of claim 4, wherein the siloxane is poly[3-((2-aminoethyl)amino) propyl]methyl(dimethyl) siloxane, methoxy-terminated.

10. The insulation material of any of claims 4 to 9, wherein the additive is present in an amount of from 0.1 to 5 wt%, preferably 0.4 to 5 wt. %, preferably from 1.5 to 5 wt. %

11. Composition for preparing an insulation material, comprising
a. either
i. calcium silicate; or
ii. calcium silicate precursors comprising silica; lime; and water;
and
b. an additive, wherein the additive comprises one or both of a siloxane and a thiosulphate.

12. The composition according to claim 11, further comprising a flocculent.

13. The composition according to claim 11 or 12, further comprising a fibrous material.

14. The composition of any of claims 11 to 13, wherein the dry weight ratio of calcium silicate to the additive, excluding all water, is from about 1:1 to about 10:0.2, such as from about 1:1 to about 10:0.4, such as from about 7:5 to about 8:0.45, such as from about 7:5 to about 8:1.75.

15. Use of the insulation material of any one of claims 4 to 10 for insulating pipes, for example steel pipes.

16. A steel component, for example a steel pipe, having thereon a layer of an insulation material of any one of claims 4 to 10.
